Europäisches Patentamt

European Patent Office

Office européen des brevets

(19)

(11) Veröffentlichungsnummer: **0 404 074**

**A1**

## (12) EUROPÄISCHE PATENTANMELDUNG

(21) Anmeldenummer: **90111583.2**

(22) Anmeldetag: **19.06.90**

(51) Int. Cl.5: **A63B 47/02, B62B 3/02**

(30) Priorität: **20.06.89 DE 8907523 U**

(43) Veröffentlichungstag der Anmeldung:
**27.12.90 Patentblatt 90/52**

(84) Benannte Vertragsstaaten:
**AT BE CH DE DK ES FR GB GR IT LI LU NL SE**

(71) Anmelder: **Fritzsche, Jochen**
**Blumenstrasse 3**
**D-8204 Brannenburg(DE)**

Anmelder: **Kierse, Wolfgang**
**Biberstrasse 19**
**D-8204 Brannenburg(DE)**

(72) Erfinder: **Fritzsche, Jochen**
**Blumenstrasse 3**
**D-8204 Brannenburg(DE)**
Erfinder: **Kierse, Wolfgang**
**Biberstrasse 19**
**D-8204 Brannenburg(DE)**

(74) Vertreter: **von Puttkamer, Nikolaus, Dipl.-Ing.**
**Pienzenauerstrasse 2**
**D-8000 München 80(DE)**

(54) **Einrichtung zum Aufsammeln und Aufbewahren von Tennisbällen.**

(57) Die Erfindung betrifft eine Einrichtung zum Aufsammeln und Aufbewahren von Tennisbällen mit einem Behälter 1, durch dessen Bodenbereich 13 Tennisbälle von außen unter einer elastischen Verformung der Tennisbälle und/oder Teilen des Bodenbereiches 13 durch Druck in das Behälterinnere einpreßbar sind. Die Einrichtung weist ein den Behälter 1 aufnehmendes höhenverstellbares Fahrgestell 2 mit einem Aufnahmeteil 9 für wenigstens einen Behälter 1 auf.

FIG. 1

EP 0 404 074 A1

## Einrichtung zum Aufsammeln und Aufbewahren von Tennisbällen

Die Erfindung betrifft eine Einrichtung zum Aufsammeln und Aufbewahren von Tennisbällen nach dem Oberbegriff des Schutzanspruches 1.

Es sind Einrichtungen zum Aufsammeln und Aufbewahren von Tennisbällen bekannt, die im wesentlichen aus einem korbartigen Behälter mit Griffteilen bestehen. Dabei besteht der Behälter zumeist aus gitterartig angeordneten Metallstäben, die an den einzelnen Kreuzungspunkten aneinander befestigt sind. Im Bereich der Seitenwände sind die Metallstäbe dabei so angeordnet, daß Tennisbälle nicht durch die zwischen ihnen bestehenden Zwischenräume hindurchtreten können. Im Bodenbereich sind parallel zueinander verlaufende Stäbe derart voneinander beabstandet, daß Tennisbälle durch sie von außen in den Behälter hinein hindurchgedrückt werden können. Anders ausgedrückt ist der Abstand der Stäbe voneinander geringfügig kleiner als der Außendurchmesser von Tennis bällen, so daß das Hindurchdrücken von Tennisbällen durch zwei voneinander beabstandete Stäbe infolge der elastischen Verformung der Tennisbälle und/oder der Stäbe leicht möglich ist.

Ein Problem derartiger Einrichtungen besteht dabei darin, daß ihre Handhabung aus verschiedenen Gründen mühsam und unpraktisch ist. Zum einen müssen die zunächst vollen Behälter zu den jeweiligen Tennisplätzen getragen werden. Zum anderen ist es erforderlich, die Behälter bei den einzelnen Aufsammeloperationen jeweils vom Boden hochzuheben und nach den Operationen wieder am Boden abzusetzen oder zu einer Bank oder dergl. zu tragen. Schließlich müssen die vollen Behälter wieder vom Tennisplatz weggetragen werden. Vor jeder Ballentnahme muß sich die entsprechende Person bücken, um den am Boden stehenden Behälter oder einen auf einer feststehende Höhe eingestellten Behälter zu erreichen. Das erwähnte Tragen und Bücken ist vor allem für ältere Personen und für Personen mit Rücken- und Bandscheibenschäden oder dergl. mühsam und auch gesundheitsschädlich.

Die Aufgabe der Neuerung besteht daher darin, eine Einrichtung zum Aufsammeln und Aufbewahren von Tennisbällen der eingangs genannten Art so auszugestalten, daß sie vergleichsweise einfach handhabbar und an die Körpergroße des jeweiligen Benutzers anpaßbar ist.

Diese Aufgabe wird durch eine Einrichtung zum Aufsammeln und Aufbewahren von Tennisbällen gelöst, die durch die in dem kennzeichnenden Teil des Schutzanspruches 1 angegebenen Merkmale gekennzeichnet ist.

Der wesentliche Vorteil der Neuerung besteht darin, daß die die Tennisbälle beinhaltenden Behälter nicht mehr zu den jeweiligen Tennisplätzen getragen werden müssen und daß es zudem ermöglicht wird, diese Behälter im Bereich der die Bälle entnehmenden Person durch Verstellen des Fahrgestelles so anzuordnen, daß sie eine zur Entnahme geeignete Höhe aufweisen, die an die Körpergröße des jeweiligen Benutzers angepaßt ist, so daß ein Bücken nicht erforderlich ist. Lediglich zur Ballaufnahme werden normalerweise die Behälter von dem neuerungsgemäß vorgesehenen Fahrgestell abgehoben und nach der Ballaufnahme wieder auf das Fahrgestell aufgesetzt, das im Bereich der die Bälle entnehmenden Person verbleibt. Es ist jedoch auch denkbar, zur Ballaufnahme die leeren Behälter mit dem Fahrgestell in die Bereiche zu verfahren, in denen sich jeweils viele der aufzunehmenden Bälle befinden. Aus dem zuvor geschilderten Sachverhalt ergibt sich, daß sich bei der Anwendung der Neuerung viele mühsame und u.U. auch gesundheitsschädliche Bück-und Tragevorgänge vermeiden lassen. Dies ist insbesondere auch deshalb von Bedeutung, weil mit Tennisbällen gefüllte Behälter relativ schwer sind.

Vor allem ist die neuerungsgemäße Einrichtung für die Anwendung durch Tennislehrer geeignet.

Ein weiterer Vorteil besteht darin, daß die neuerungsgemäße Einrichtung einfach und preisgünstig herstellbar ist.

Durch die Vorsehung eines Fahrgestelles ermöglicht die Neuerung die Verwendung größerer und/oder mehrerer Behälter und damit im Vergleich zum Stand der Technik den Transport von wesentlich mehr Tennisbällen.

Ein Vorteil der Neuerung besteht darin, daß das Fahrgestell in eine Ebene zusammenklappbar ist, so daß es bequem und platzsparend, beispielsweise in einem PkW transportiert werden kann.

Bei einer bevorzugten Weiterbildung der Neuerung ist das Fahrgestell an die unterschiedlichen Größen von verschiedenen Personen bzw. Spielern in einer äußerst einfachen Weise anpaßbar.

Vorteilhafterweise ist ein neuerungsgemäßer Behälter so ausgestaltet, daß bei der Ballaufnahme eine besonders gute Kraftübertragung von den Griffteilen auf den Behälter und somit auch auf seinen Bodenbereich erfolgt. Dadurch wird die Ballaufnahme wesentlich erleichtert.

Weitere vorteilhafte Ausgestaltungen der Neuerung gehen aus Unteransprüchen hervor.

Im folgenden werden die Neuerung und deren Ausgestaltungen im Zusammenhang mit den Figuren näher erläutert. Es zeigt:

Fig. 1 eine Seitenansicht der neuerungsgemäßen Einrichtung;

Fig. 2 eine Vorderansicht der neuerungsgemäßen Einrichtung entlang der Linie 2-2 der Fig. 1;

Fig. 3 eine Aufsicht auf die als Aufnahmeteil dienende Aufnahmeplatte; und Behälter; und

Fig. 4 bis 6 Weiterbildungen der Neuerung.

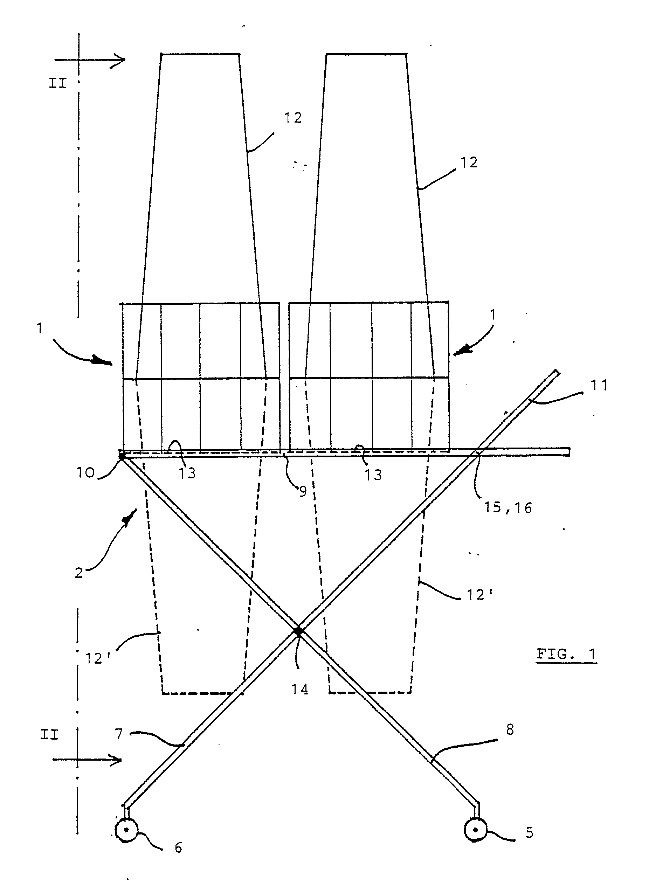

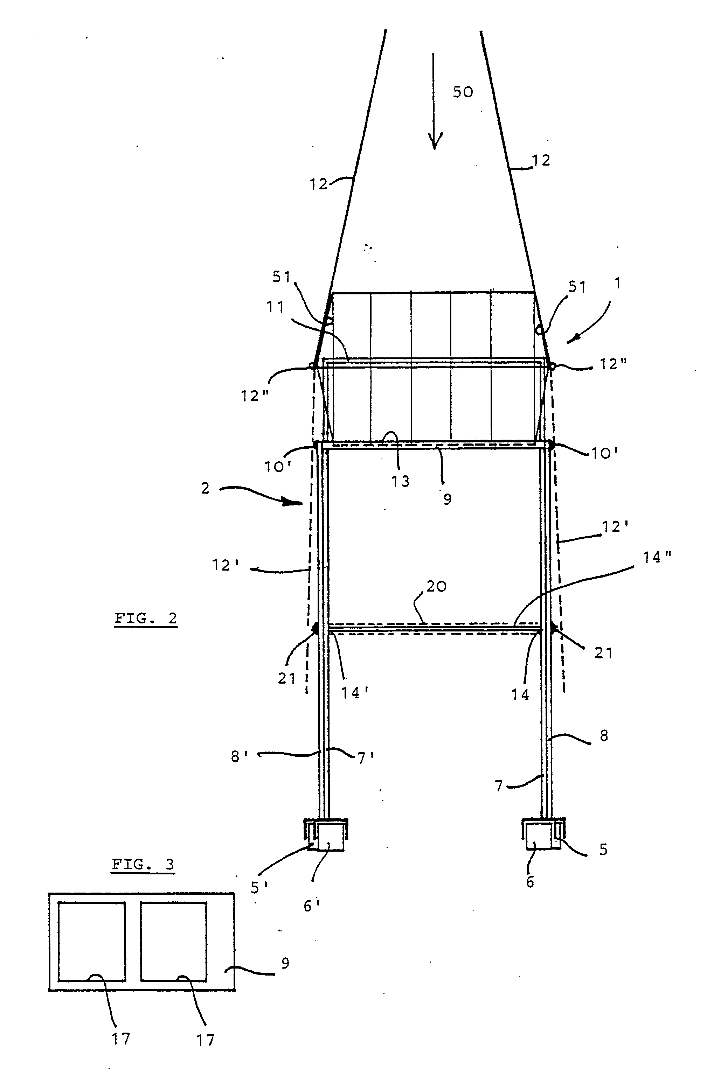

In der aus den Fig. 1 und 2 ersichtlichen Weise besteht die neuerungsgemäße Einrichtung zum Aufsammeln und Aufbewahren von Tennisbällen im wesentlichen aus einem Fahrgestell 2, mit dem wenigstens ein Behälter 1 zum Aufsammeln und Aufbewahren von Tennisbällen transportierbar ist. Im Beispiel der Fig. 1 und 2 sind auf einem Aufnahmeteil 9 des Fahrgestelles 2 zwei Behälter 1 anordenbar.

Im folgenden wird zunächst das Fahrgestell 2 näher erläutert. Vorzugsweise besteht dieses im wesentlichen aus an jeder Seite in einem Drehpunkt 14 bzw. 14$'$ drehbar miteinander verbundenen Stäben 7, 8 bzw. 7$'$, 8$'$, wobei die Drehpunkte 14, 14$'$ in Querrichtung des Fahrgestelles 2 zueinander ausgerichtet sind. Beispielsweise liegt der Drehpunkt 14, 14$'$ jeweils in der Mitte der Längserstreckung der Stäbe 7 und 8 bzw. 7$'$ und 8$'$. An dem unteren Ende jedes Stabes 7, 8, 7$'$, 8$'$ ist ein um eine horizontale Achse drehbares Rad 6 bzw. 5 bzw. 6$'$ bzw. 5$'$ angeordnet. Die oberen Endbereiche der sich gegenüberliegenden einen Stäbe 8 bzw. 8$'$ sind an einer Seite des Aufnahmeteiles 9 in einem Drehpunkt 10 bzw. 10$'$ drehbar gelagert, wobei die Drehpunkte 10 und 10$'$ in der Querrichtung des Fahrgestelles 2 zueinander ausgerichtet sind. Mit der Hilfe von Verstelleinrichtungen 15, 16, die nachfolgend noch näher erläutert werden, sind die oberen Endbereich der sich gegenüberliegenden anderen Stäbe 7 bzw. 7$'$ an verschiedenen Punkten ihrer Längserstreckung an einem Punkt der anderen Seite des Aufnahmeteiles 9 festlegbar bzw. arretierbar, wobei die verschiedenen Punkte der Längserstreckung des Endbereiches voneinander beabstandet und in der Querrichtung des Fahrgestelles 2 zueinander ausgerichtet sind.

Es wird darauf hingewiesen, daß auch eine Ausführungsform denkbar ist, bei der nur die unteren Endbereiche der einen oder anderen Stäbe mit den genannten Rädern versehen sind. In diesem Fall dienen die räderlosen unteren Endbereiche der anderen oder einen Stäbe, die während der Bewegung des Fahrgestells angehoben werden, als Stütze und Sicherung gegen ein unbeabsichtigtes Wegrollen des Fahrgestelles. Zur Erhöhung der Beweglichkeit bzw. Wendigkeit des Fahrgestelltes können wenigstens zwei sich gegenüberliegende Räder auch um eine vertikale Achse drehbar sein.

Durch die scherenartig um die in Querrichtung zueinander ausgerichteten Drehpunkte 14 bzw. 14$'$ verschwenkbaren Stäbe 7, 8 bzw. 7$'$, 8$'$ wird erreicht, daß bei verschiedenen Arretierungen der Einrichtungen 15, 16 eine Höhenverstellung der Aufnahmeteiles 9 erfolgen kann. Dadurch kann eine Anpassung des Fahrgestelles 2 an verschieden große Personen erfolgen.

Vorzugsweise wird der Griff 11 zum Verschieben des Fahrgestelles 2 durch eine einfache Verlängerung der Stäbe 7 bzw. 7$'$ und eine Verbindung der freien Enden dieser Verlängerungen in Querrichtung erreicht. Eine derartige Ausgestaltung eines Griffes 11 hat den Vorteil, daß gleichzeitig mit der zuvor beschriebenen Höhenverstellung des Aufnahmeteiles 9 auch eine entsprechende Höhenverstellung des Griffes 11 bewirkt wird. Es ist jedoch auch denkbar, den Griff 11 nicht durch die beschriebenen Verlängerungen zu bilden, sondern beispielsweise fest an dem Aufnahmeteil 9 anzuordnen.

Durch Lösen der Arretierungseinrichtungen 15 und 16 kann das Fahrgestell 2 in einer einfachen Weise flach in eine Ebene zusammengeklappt werden. Dadurch wird ein äußerst einfacher Transport des Fahrgestelles 2 beispielsweise im Kofferraum eines Personenkraftwagens ermöglicht.

In der in den Fig. 1 und 2 dargestellten Weise sind auf dem vorzugsweise plattenförmig ausgebildeten Aufnahmeteil 9 vorzugsweise zwei Behälter zum Aufsammeln und Aufbewahren und Tennisbällen in der Längsrichtung des Fahrgestelles 2 gesehen hintereinander anordenbar. Es ist ohne weiteres denkbar auch mehr als zwei dieser Behälter hinter- und/oder nebeneinander auf der Aufnahmeplatte 9 anzuordnen.

Aus der Fig. 3 ist ersichtlich, daß in der Aufnahmeplatte 9 muldenförmige Vertiefungen 17 vorgesehen sein können, in die die Bodenteile 13 der Behälter 1 einsetzbar sind. Dadurch wird erreicht, daß die Behälter 1 auf der Aufnahmeplatte 9 gegen eine seitliche Verschiebung gesichert werden und daß sie einfach und schnell in der richtigen Lage abgesetzt werden können. An der Stelle der Vertiefungen 17 können auch die Bodenteile 13 wenigstens teilweise umgebende Leisten oder dergleichen an der Aufnahmeplatte 9 befestigt sein.

In der aus der Fig. 2 ersichtlichen Weise können die Drehpunkte 14 und 14$'$, in denen die Stäbe 7, 8 und 7$'$, 8$'$ gegeneinander verdrehbar sind, einfach durch in den genannten Stäben vorgesehene Bohrungen gebildet werden, durch die ein Querstab 14$''$ hindurchgeführt ist. Der Querstab 14$''$ kann zwischen den Stäben 7, 8, 7$'$, 8$'$ von einem Hohlrohr 20 umgeben sein, das als Abstandshalter und Stabilisator für die genannten Stäbe dient. Der Querstab 14$''$ kann eine Gewindestange sein, auf deren nach außen über die genannten Stäbe vorragende Enden vorzugsweise Hutmuttern 21 oder dergleichen aufgesetzt sind.

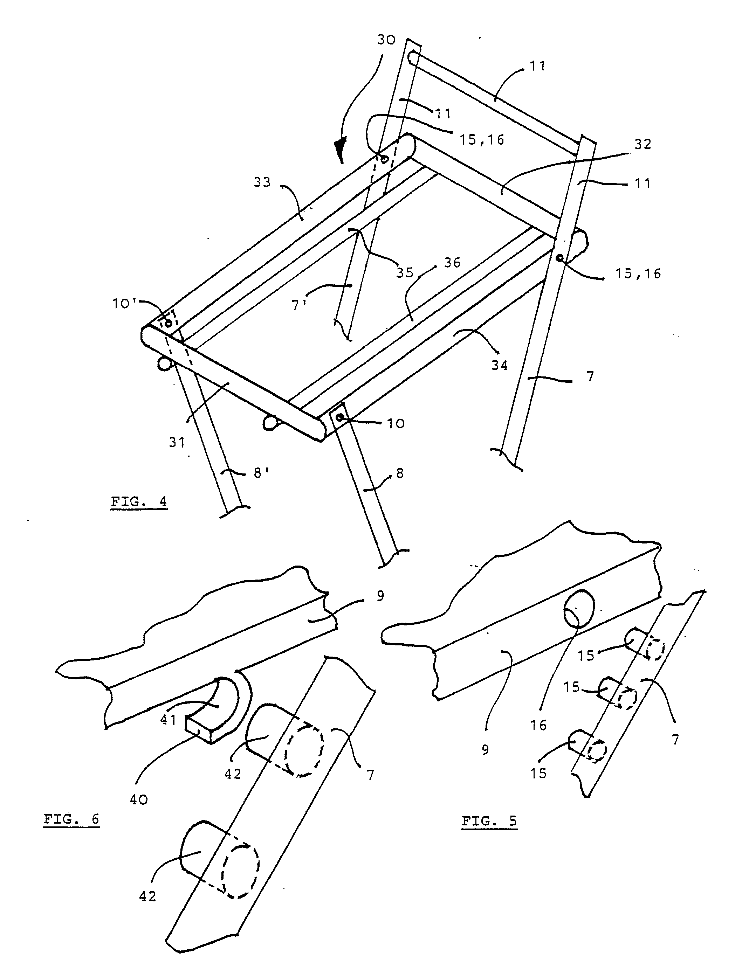

Gemäß Fig. 4 wird eine besonders einfach aufgebaute Ausgestaltung des Aufnahmeteiles 9 erläutert. Im wesentlichen besteht dieses Aufnahmeteil 9 aus einem vorzugsweise rechteckigen Rahmen 30, der vorzugsweise aus Rohrteilen zusammengesetzt ist. Im wesentlichen besteht dieser Rahmen 30 aus einem vorderen Querrohr 31, einem hinteren Querrohr 32 und zwei Seitenrohren 33, 34. Dabei sind die oberen Enden der Stäbe 8, 8' drehbar am vorderen Endbereich des Rahmens 30 in in Querrichtung zueinander ausgerichteten Drehpunkten 10, 10' drehbar angeordnet. Entsprechend sind die oberen Endbereiche der Stäbe 7, 7' am hinteren Endbereich des Rahmens 30 mit der Hilfe der Befestigungseinrichtungen 15, 16, die noch näher erläutert werden, befestigbar, wobei zur Bildung des Griffteiles 11 die bereits beschriebenen Verlängerungen und der ihre freien Enden verbindende Querstab vorgesehen sein können.

Als Auflage für die Bodenbereiche der im Rahmen 30 anzuordnenden Behälter 1 dienen Stäbe, die an den Unterseiten des Rahmens 30 in Quer- und/oder Längsrichtung verlaufend derart befestigt sind, daß sie eine Auflage für die Behälter 1 bilden können. Vorzugsweise sind in der in der Fig. 4 dargestellten Weise 2 in Längsrichtung verlaufende Stäbe 35, 36 vorgesehen, die zweckmäßigerweise ebenfalls durch ein Rohr gebildet werden, die gegenüber den Seitenrohren 33, 34 des Rahmens 30 etwas nach innen versetzt sind und parallel zu den Seitenrohren 33, 34 verlaufen. In Querrichtung sind die Bodenbereiche der Behälter 1 so bemessen, daß sie mit einem geringen Spiel in Querrichtung gesehen zwischen die Seitenrohre 33, 34 eingeführt werden können, so daß sie auf den Längsrohren 35, 36 aufliegen. Die gegenüber der Unterseite des Bodenbereiches 13 erhöhten Längsrohre 33, 34 dienen dann als seitliche Anlagekanten für die Behälter 1.

Der Drehpunkt 10 bzw. 10' zwischen dem Stab 8 bzw. 8' und dem Aufnahmeteil 9 wird vorzugsweise dadurch gebildet, daß an jeder Seite des Aufnahemteiles 9 eine Öffnung vorgesehen ist, in die ein am Ende des Stabes 8, 8' befestigter Stift eingreift oder daß entsprechend dem Querstab 14" ein Querstab vorgesehen ist, der durch Öffnungen der Enden der Stäbe 8, 8' und durch entsprechende Öffnungen des Aufnahmeteiles 9 verläuft.

Als Befestigungseinrichtungen sind vorzugsweise an der anderen Seite des Aufnahmeteiles 9 sich in Querrichtung gegenüberliegende Öffnungen 16 vorgesehen, in die Stifte 15 einsteckbar bzw. einrastbar sind, die von den Stäben 8, 8' nach innen vorragen und entlang der oberen Endbereiche der Stäbe 7, 7' voneinander beabstandet und zueinander in Querrichtung ausgerichtet sind (Fig. 5).

Aus der Fig. 6 geht eine andere bevorzugte Ausgestaltung der Befestigungseinrichtungen hervor. Demgemäß befinden sich am Aufnahmeteil 9, das als Aufnahmeplatte aufgebaut oder entsprechend der Fig. 4 ausgestaltet sein kann, in Querrichtung an der anderen Seite gegenüberliegende Elemente 40, die nach unten über das Aufnahmeteil 9 vorstehen und an ihrer dem vorderen Ende desselben zugewandten Seite eine gebogene oder abgewinkelte Fläche 41 bilden, die vorzugsweise halbkreisförmig ausgestaltet ist, in die ein sich vom Endbereich der Stäbe 7, 7' vorzugsweise nach innen ragender Stift 42 einrastbar ist. Dabei sind sich in Querrichtung gegenüberliegend an den oberen Endbereichen der Stäbe 7, 7' voneinander beabstandet mehrere Stifte 42 vorgesehen, so daß zur Höhenverstellung des Fahrgestelles verschiedene Stifte 42 in den Elementen 40 eingerastet werden können. Die durch die Elemente 40 umschlossene Aufnahmeöffnung für die Stifte 42 öffnet sich zum vorderen Ende des Aufnahmeteiles 9 hin. Es ist denkbar, die Stifte 42 durch eine Schnappeinrichtung in den genannten Öffnungen festzuhalten.

Die an sich bekannten Behälter 1 weisen im Bodenbereich 13 die eingangs erwähnten Stäbe auf, die derart voneinander beabstandet sind, daß Tennisbälle von außen unter einer elastischen Verformung der Bälle und/oder der Stäbe in den Behälter hineinpreßbar sind. In der Praxis geschieht dies dadurch, daß der Bodenbereich 13 auf die am Boden eines Tennisplatzes liegenden Bälle gedrückt wird. Hierzu wird der Behälter 1 an den Griffteilen 12, 12 gehalten. Im abgestellten Zustand klappen diese verschwenkbar an den in Querrichtung gesehenen Seiten des Behälters verschwenkbar befestigten Teile 12, 12 jeweils in die durch das Bezugszeichen 12' dargestellte Lage. Dabei sind die Griffteile 12, 12 vorzugsweise jeweils etwa U-förmig ausgestaltet, wobei die freien Enden der Schenkel des "U" jeweils voneinander beabstandet in den genannten Schwenkpunkten an den Seitenteilen der Behälter 1 gehalten werden. Dabei sind die Behälter 1 in Querrichtung des Fahrgestelles 2 so bemessen bzw. gestaltet, daß die Schwenkpunkte 12" der Handgriffe 12, 12 in Querrichtung gesehen etwa oberhalb der Außenseiten des Aufnahmeteiles 9 angeordnet sind, so daß sie etwa vertikal neben den Stäben 7, 8, 7', 8' des Fahrgestelles 2 herabhängen können.

Vorzugsweise sind die Behälter in der insbesondere aus der Fig. 2 ersichtlichen Weise so gestaltet, daß ihre in Querrichtung gesehenen Seitenflächen, an denen die Griffteile 12, 12 verschwenkbar befestigt sind, ausgehend von der Ebene der Schwenkpunkte 12", 12" nach oben schräg aufeinanderzu verlaufen, so daß die Griffteile 12, 12 beim Ergreifen des Behälters 1 in der aus der Fig. 2 ersichtlichen Weise ausgehend von den Schwenkpunkten 12", 12" an den schrägen Seitenflächen anliegen und schräg aufeinanderzu verlaufend nach oben über diese hinausragen. Dies hat den Vorteil, daß bei der Ausübung einer Kraft von den Griffteilen 12, 12′ nach unten (Pfeil 50) der Druck nicht nur auf die Schwenkpunkte 12″, 12″ ausgeübt wird, wie dies der Fall wäre, wenn die Griffteile 12, 12 vertikal verlaufen würden. Vielmehr wird dieser Druck auf die gesamte schräge Anlagefläche 51 zwischen den Griffteilen 12, 12 und den Seitenflächen des Behälters 1 ausgeübt und von dort schräg auf die Bodenfläche 13 des Behälters ver teilt, so daß sich infolge der besseren Druckverteilung die Bälle leichter aufnehmen lassen.

In der aus der Fig. 2 ersichtlichen Weise verlaufen ausgehend von der Ebene der Schwenkpunkte 12″, 12″ die in Querrichtung gesehenen Seitenflächen des Behälters 1 schräg nach unten und nach innen, derart, daß die Bodenfläche 13 in die Vertiefung 17 der Aufnahmeplatte 9 (Fig. 3) oder zwischen die Innenseiten des Rahmens 30 (Fig. 4) paßt.

Es wird darauf hingewiesen, daß bei den Befestigungseinrichtungen der Fig. 5 und 6 an der Stelle der Öffnungen 16 ein Stift und an der Stelle der Stifte 15 Öffnungen bzw. an der Stelle des Elements 40 ein Stift und an der Stelle der Stifte 42 den Elementen 40 entsprechende Elemente vorgesehen sein können.

**Ansprüche**

1. Einrichtung zum Aufsammeln und Aufbewahren von Tennisbällen mit einem Behälter (1), durch dessen Bodenbereich (13) Tennisbälle von außen unter einer elastischen Verformung der Tennisbälle und/oder Teilen des Bodenbereiches (13) durch. Druck in das Behälterinnere einpreßbar sind, gekennzeichnet durch ein den Behälter (1) aufnehmendes höhenverstellbares Fahrgestell (2) mit einem Aufnahmeteil (9) für wenigstens einen Behälter (1).

2. Einrichtung nach Anspruch 1, dadurch gekennzeichnet, daß das Fahrgestell (2) wenigstens ein Radpaar aufweist, dessen Räder (6, 6′) jeweils um eine in Querrichtung verlaufende, in der Gebrauchslage horizontale Achse drehbar sind.

3. Einrichtung nach Anspruch 2, dadurch gekennzeichnet, daß das Fahrgestell (2) zwei voneinander beabstandete Radpaare aufweist.

4. Einrichtung nach Anspruch 2 oder 3, dadurch gekennzeichnet, daß die Räder wenigstens eines Radpaares um in der Gebrauchslage jeweils vertikale Achsen verschwenkbar sind.

5. Einrichtung nach einem der Ansprüche 1 bis 4, dadurch gekennzeichnet, daß das Fahrgestell (2) in Querrichtung voneinander beabstandet jeweils zwei eine Stäbe (8, 8′) und zwei andere Stabe (7 7′) aufweist, daß an jeder Seite ein Stab (8 bzw. 8′) und ein anderer Stab (7 bzw. 7′) in einem Drehpunkt (14 bzw. 14′) drehbar miteinander verbunden sind, daß an den unteren Enden wenigstens der einen oder anderen Stäbe (8, 8′; 7, 7′) die Räder (5, 5′; 6, 6′) eines Radpaares angeordnet sind, daß die Endbereiche der einen oder anderen Stäbe (8, 8′ bzw. 7, 7′) um eine in Querrichtung verlaufende Achse (10, 10′) an der einen Seite des Aufnahmeteiles (9) für wenigstens einen Behälter (1) drehbar befestigt sind, und daß die Endbereiche der anderen oder einen Stäbe (7, 7′ bzw. 8, 8′) durch eine Befestigungseinrich tung (15, 16; 40, 42) in in der Längsrichtung der einen oder anderen Stäbe (7, 7′ bzw. 8, 8′) versetzten Punkten, die sich in Querrichtung jeweils gegenüberliegen, an der anderen Seite des Aufnahmeteiles (9) befestigbar sind.

6. Einrichtung nach Anspruch 5, dadurch gekennzeichnet, daß das Aufnahmeteil (9) die Form einer Aufnahmeplatte aufweist, auf der der wenigstens eine Behälter abstellbar ist.

7. Einrichtung nach Anspruch 6, dadurch gekennzeichnet, daß in der Aufnahmeplatte (9) wenigstens eine muldenförmige Vertiefung (17) zur Aufnahme des Bodenbereiches (13) des Behälters (1) angeordnet ist.

8. Einrichtung nach Anspruch 6, dadurch gekennzeichnet, daß das Aufnahmeteil (9) wenigstens einen Bereich aufweist, in dem der Bodenbereich (13) des Behälters (1) absetzbar ist, und daß der Bereich durch Randleisten oder dergleichen gebildet ist, die an dem Aufnahmeteil (9) befestigt sind und den Bodenbereich (13) wenigstens teilweise umgeben.

9. Einrichtung nach Anspruch 5, dadurch gekennzeichnet, daß das Aufnahmeteil einen Rahmen (30) aufweist, an dessen Unterseite Stäbe befestigt sind, die eine Auflage für den Behälter bilden.

10. Einrichtung nach Anspruch 9, dadurch gekennzeichnet, daß die Stäbe in der Längsrichtung des Rahmens (30) verlaufende Stäbe sind.

11) Einrichtung nach Anspruch 9 oder 10, dadurch gekennzeichnet, daß der Rahmen (30) durch Querrohre (31, 32) und Längsrohre (33, 34) gebildet ist.

12) Einrichtung nach einem der Ansprüche 9 bis 11, dadurch gekennzeichnet, daß als Stäbe Rohre vorgesehen sind.

13. Einrichtung nach einem der Ansprüche 1 bis 12, dadurch gekennzeichnet, daß das Fahrgestell (2) ein Griffteil (11) aufweist.

14. Einrichtung nach Anspruch 13, dadurch gekennzeichnet, daß das Griffteil (!1) durch Verlängerungen der oberen Enden der anderen oder einen Stäbe (7, 7′ bzw. 8, 8′) gebildet ist.

15. Einrichtung nach Anspruch 14, dadurch gekennzeichnet, daß die Enden der Verlängerungen durch einen Querstab miteinander verbunden sind.

16. Einrichtung nach einem der Ansprüche 5 bis 15, dadurch gekennzeichnet, daß die Befestigungseinrichtung durch in der Längsrichtung der Stäbe voneinander beabstandete Öffnungen (15) (oder Stifte), die sich in Querrichtung jeweils gegenüberliegen und durch an dem Aufnahmeteil (9) sich in Querrichtung gegenüberliegende Stifte (16) (oder Öffnungen) gebildet ist, die in die Öffnungen (15) (oder Stifte) einrastbar bzw. einführbar sind.

17. Einrichtung nach einem der Ansprüche 5 bis 15, dadurch gekennzeichnet, daß die Befestigungsesinrichtungen durch in der Längsrichtung der Stäbe voneinander beabstandete Stifte (42) (oder Elemente, die Stifte aufnehmen und festhalten können), die sich in Querrichtung jeweils gegenüberliegen und durch an den Aufnahmeteil (9) sich gegenüberliegende Elemente (40) ,die Stifte aufnehmen und festhalten können (oder Stifte) gebildet sind.

18. Einrichtung nach Anspruch 17, dadurch gekennzeichnet, daß das Element (40) die Form eines an dem Aufnahmeteil (9) oder an den Stäben befestigten Teiles mit einem den Stift (42) wenigstens teilweise umschließenden Aufnahmeraum (41) aufweist.

19. Einrichtung nach einem der Ansprüche 1 bis 18, dadurch gekennzeichnet, daß der Behälter (1) Griffteile (12, 12) aufweist, die an Schwenkpunkten (12″, 12″) des Behälters (1) verschwenkbar befestigt sind, und daß die Schwenkpunkte (12, 12′) in der Querrichtung durch einen Abstand voneinander entfernt sind, der etwa der Breite des Fahrgestelles (2) in der Querrichtung entspricht, derart, daß die Griffteile (12, 12) etwa vertikal seitlich neben dem Fahrgestell (2) herabhängen können.

20. Einrichtung nach Anspruch 19, dadurch gekennzeichnet, daß sich die Breite des Behälters (1) ausgehend von der Ebene der Schwenkpunkte (12″, 12″) nach oben schräg verjungt, derart, daß die gebildeten Schrägen (51) Anlegeflächen für die über den Behälter (1) hinausragenden Griffteile (12, 12) bildet.

21. Einrichtung nach Anspruch 19 oder 20, dadurch gekennzeichnet, daß sich die Breite des Behälters (1) ausgehend von der Ebene der Schwenkpunkte (12″, 12″) nach unten in Richtung auf das Bodenteil (13) verjüngt.

22.Einrichtung nach einem der Ansprüche 19 bis 21, dadurch gekennzeichnet, daß die Griffteile (12, 12) jeweils die Form eines "U" aufweisen und daß die freien Enden des "U" an den Schwenkpunkten mit dem Behälter verbunden sind.

FIG. 1

FIG. 2

FIG. 3

FIG. 4

FIG. 6

FIG. 5

Europäisches
Patentamt

**EUROPÄISCHER RECHERCHENBERICHT**

Nummer der Anmeldung

EP 90111583.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| Y | <u>US - A - 4 412 697</u> (VERDE) <br> * Fig. 1-9 * | 1 | A 63 B 47/02 <br> B 62 B 3/02 |
| A | | 19,21, 22 | |
| | -- | | |
| Y | <u>CH - A5 - 619 186</u> (SUTER) <br> * Fig. 1-3; Zusammenfassung * | 1 | |
| A | | 2,3,6 | |
| | -- | | |
| A | <u>US - A - 4 258 891</u> (MITCHELL) <br> * Gesamt * | 2,3,4, 5,6, 13,14, 15,16, 17,18 | |
| | -- | | |
| A | <u>DE - A1 - 3 631 998</u> ("PUKY" GMBH FAHRZEUGFABRIK) <br> * Fig. 1-5; Zusammenfassung * | 2,3,8, 9,10, 11,12 | RECHERCHIERTE SACHGEBIETE (Int Cl⁵) |
| | -- | | |
| A | <u>FR - A1 - 2 574 670</u> (BOSSARD) <br> * Fig. 1-5; Anspruch 3 * | 1,2,3, 4 | A 63 B 47/00 <br> A 63 B 61/00 <br> A 63 B 55/00 <br> B 62 B 3/00 |

Der vorliegende Recherchenbericht wurde für alle Patentansprüche erstellt.

| Recherchenort | Abschlußdatum der Recherche | Prüfer |
|---|---|---|
| WIEN | 09-08-1990 | BRÄUER |